# DEMANDE DE BREVET EUROPEEN

(11) **EP 1 683 708 A1**
(43) Date de publication de la demande: **26.07.2006**
(21) Numéro de dépôt: 06290104.6
(22) Date de dépôt: 17.01.2006
(51) Int. Cl.: B62D 21/12, B62D 27/06, B62D 65/02, B62D 65/04

(54) **Processus de fabrication de remorques à coques auto porteuses**

(30) Priorité: 21.01.2005 FR 0500619
(71) Demandeur: Vignes, Eric, 34000 Montpellier (FR)
(72) Inventeur: Vignes, Eric, 34000 Montpellier (FR)

(57) **Abrégé**

Processus de gamme de fabrication de remorques et / ou semi-remorques à coque auto porteuse.

L'invention concerne le processus de fabrication d'un produit composé de sections de dimensions et de fonctions différentes et/ ou complémentaires permettant d'optimiser sa construction.

## Description

La présente invention concerne un processus de fabrication de remorque et/ ou de semi-remorque à coque auto porteuse.

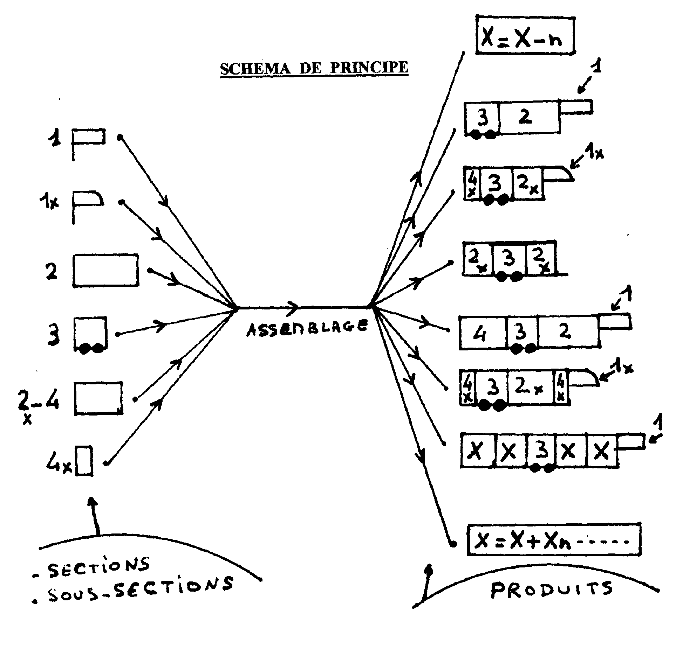

Traditionnellement, les remorques sont constituées d'un châssis sur lequel, en fonction de l'application finale, il est fixé une carrosserie ou un équipement spécifique en fonction du besoin du client. Dans le cas des remorques à coque auto porteuse, il a été imaginé de construire des sections de remorque de longueurs différentes et ayant des fonctions différentes.
En effet, il est défini, qu'une remorque et /ou une semi-remorque à coque auto porteuse est constituée d'une section « avant » (1), d'une « section centrale » (2), d'une section « technique- trains roulants » (3) et d'une section « arrière » (4) celle-ci positionnée en porte à faux par rapport aux trains roulants. Les sections de remorques, qui peuvent être composées de sous-sections(1-2-3-4-X-X-...), sont définies dans une gamme de fabrication déterminée, le nombre de sections n'étant pas limité en nombre. En fonction de l'application finale la longueur, la largeur, la hauteur, l'épaisseur de la remorque peuvent varier. La position du train roulant(3) varie aussi en fonction des nécessitées des charges et de leurs répartitions, ce qui fait varier également la dimension du porte à faux arrière (4) (fig 1). Il a été imaginé de diviser la longueur et/ ou la largeur et/ ou la hauteur et/ ou l'épaisseur de la remorque ou de la semi-remorque en sections telles que quelque soit la dimension du produit final, le nombre de sections, au prorata des différentes dimensions de remorques et/ ou de semi remorques soit optimisées.
L'accouplement des différentes sections peut s'effectuer par tout moyen de liaison mécanique, par collage, par soudure, par rivetage, par boulonnage, par cerclage, et ceci de façon réversible ou irréversible.

Ce processus de fabrication, selon l'invention permet, ces exemples n'étant pas limitatifs :
- D'optimiser les encours de fabrication
- De réduire les stocks de produits semi-finis
- D'augmenter la réactivité d'une gamme de fabrication par rapport aux fluctuations et/ ou à la montée en puissance d'un prévisionnel de commandes.
- De modifier, le temps total de fabrication, le coût de revient.
- De proposer à un client un produit « sur mesure » tout en gardant une gamme de fabrication « standard »
- De limiter le coût de réparation en cas d'accident.
- De modifier une application initiale, en fonction du besoin client ou sur un marché de l'occasion.
- D'employer une main d'oeuvre moins qualifiée à cahier des charges égal, eu égard à la simplification du processus de fabrication (assemblage de sous-ensembles)
- De diminuer le coût et la complexité d'un site de production traditionnel en l'utilisant comme site d'assemblage.
- De simplifier et /ou de réduire le nombre et /ou la complexité des marbres de fabrication à gamme égale sur un standard donné.

Cette invention est applicable à toute gamme de fabrication de tout véhicule roulant, flottant, motorisé ou non sans limite de poids minimum et/ ou maximum.

## Revendications

1. Processus de fabrication de remorques et/ ou de semi-remorques à coque auto porteuse **caractérisé par le fait que** le produit est fabriqué en sections de dimensions variables qui, dans un deuxième temps sont accouplées entre elles, et définissent l'application finale du produit. La section « avant »(1), la section « centrale »(2), la section « technique -trains roulants »(3), la section « arrière »(4) peuvent être composées de sous-sections ou être des sous-sections d'elles mêmes; par exemple : 1= (1+X) ou (2-X), 2=(2+X)ou (2-X), etc. etc.
Ce processus de fabrication est applicable à toute gamme de fabrication de tout véhicule roulant ,flottant, motorisé ou pas et plus particulièrement à toute remorque et / ou semi remorque à coque auto porteuse sans limite de poids minimum ou maximum.

2. Dispositif selon la revendication 1, **caractérisé par le fait que** le produit est fabriqué en sections de dimensions variables

3. Dispositif selon la revendication 1, **caractérisé par le fait que** ces sections sont accouplées par tout moyen de liaison mécanique irréversible ou réversible. L'application finale peut être un ensemble de sections et /ou de produits accouplés

4. Dispositif selon la revendication 1, **caractérisé par le fait que** les sections 1-2-3-4-X-X-X..... peuvent être composées de sous sections ou/ et être elles-mêmes des sous sections en fonction du produit final.
